# EUROPEAN PATENT SPECIFICATION

(11) **EP 1 533 975 B1**
(45) Date of publication and mention of the grant of the patent: **01.12.2010**
(21) Application number: 04105301.8
(22) Date of filing: 26.10.2004
(51) Int. Cl.: H04L 29/06

(54) **Method and System for communication between a multi-modal device and a Web Application**
Verfahren und System zur Kommunikation zwischen einem multimodalen Endgerät und einer Webanwendung
Procédé et système pour la communication entre un terminal multimode et une application Web

(30) Priority: 18.11.2003 EP 03104240
(43) Date of publication of application: 25.05.2005
(73) Proprietor: International Business Machines Corporation, Armonk, NY 10504 (US)
(72) Inventor: Haenel, Walter, 71088 Holzgerlingen (DE); Mueller, Lars, 19089 Crivitz (DE)
(74) Representative: Klein, Hans-Jörg

(56) References cited:
- EP-A- 1 143 679
- US-A1- 2002 194 388
- US-A1- 2003 088 421

## Description

### Field of the present invention

The present invention relates to the communication of a multi - modal device with a Web application in general, and in more particular to a method and system for switching between visual and voice communication of a multi - modal device with a Portal application without loosing the already existing session data.

The term "multi- modal device" (hereinafter called "device") as used in the present invention means any data processing device as well as any phone or mobile phone having the capabilities to support voice as well as visual communication (mode of communication). Normally, such devices additionally include a screen, a visual browser, voice browser, and speech input/speech output means.

### State of the art

A typical example for such a device is a mobile phone which supports voice and visual communication. However any other device which has the same capabilities may be used instead.

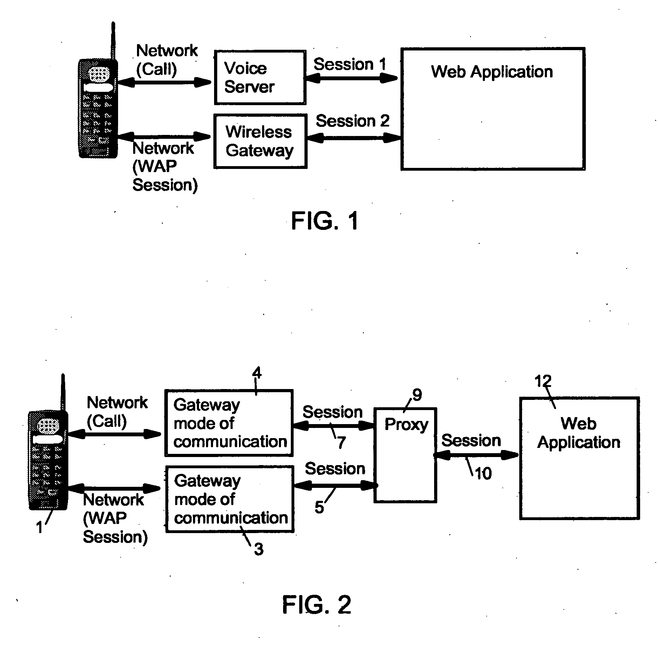

Such devices can access a Web application, e.g. Portal Application, in at least in two modes of communication. The first mode of communication (voice Communication) is to use the device as a normal phone and access the Web application via the telephone network (e.g. Voice Server; see Fig. 1)

The second mode of communication (visual communication) is to use the device as normal data processing device (e.g. a device that supports Wireless Application Protocol (WAP)) to access the Web Application via an information processing network (e.g. Wireless Gateway).

The visual communication of the device with a Web Application is preferably established via a WAP browser used by the device that uses preferably WML to display the content of the Web application. The device opens a connection to the wireless gateway. A session between wireless gateway and Web Application is established (see Fig.1).

The voice communication of a device with a Web Application is preferably established via a Voice Server that is connected by dialing a phone number called DNIS (Dialed Number Identification Server). By evaluating the phone number the voice server can determine the service to be requested and establishes a session with the Web Application. The Web Application responds for example with Voice XML (VXML) that is translated into voice by the Voice Server. Furthermore, the Voice Server is responsible for speech recognition (see Fig. 1).

Since the Web Application does not recognize that the two modes of communication are established via the same device, each mode of communication is assigned its own session data with the Web application. The already existing session data generated by one mode of communication cannot be used by another mode of communication although the same device is used. The user has to initiate a new log - in procedure when he switches from one mode to another mode of communication.

European Patent Application EP 1 143 679 A2 discloses a system and method for providing conversational (multi-modal) access to information over a communications network from any location, at any time, utilizing any type of client/access, through a conversational (multi-modal) portal. In one aspect, a conversational portal comprises a conversational (muli-modal) browser that is capable of conducting multi-modal dialog with client/access devices having varying input/output (I/O) modalities. The conversational browser retrieves information (such as content pages, applications) from an information source (for example, content server) in response to a request from a requesting client/access device and then serves the retrieved information to the requesting client/access device in a format that is compatible with the I/O modalities of the requesting client/access device. In another aspect, the conversational portal provides multimedia access on demand. The conversational portal comprises an audio indexing system for segmenting and indexing audio and multimedia data obtained from an information source, as well as a multimedia database for storing the indexed audio and multimedia data. A subscribing user can compose and maintain a broadcast program wherein the user specifies which types, and in what order, different segments (news, radio, etc.) stored in the database are played back/broadcasted to the user.

US Publication No. US 2002/0194388 A1 discloses systems and methods for building multi-modal browsers applications and, in particular, to systems and methods for building modular multi-modal browsers using a DOM (Document Object Model) and MVC (Model-View Controller)framework that enables a user to interact in parallel with the same information via a multiplicity of channels, devices and/or user interfaces, while presenting a unified, synchronized view of such information across the various channels, devices and/or user interfaces supported by the multi-modal browser. The use of a DOM framework (or specifications similar to DOM) allows existing browsers to be extended without modification of the underling browser code. A multi-modal browser framework is modular and flexible to allow various fat client and thin (distributed) client approaches.

US Publication No. US 2003/0088421 A1 discloses systems and methods for conversational computing and, in particular, to systems and methods for building distributed conversational applications using a Web services-based model wherein speech engines (e.g., speech recognition) and audio I/O systems are programmable services that can be asynchronously programmed by an application using a standard, extensible SERCP (speech engine remote control protocol), to thereby provide scalable and flexible IP-based architectures that enable deployment of the same application or application development environment across a wide range of voice processing platforms and networks/gateways (e.g., PSTN (public switched telephone network), Wireless, Internet and VoIP (Voice over IP)). Systems and methods are further provided for dynamically allocating, assigning, configuring and controlling speech resources such as speech engines, speech pre/post processing system, audio subsystems, and exchanges between speech engines using SERCP in a web service-based framework.

### Object of the present invention

It is therefore object of the present invention to improve the communication between multi modal phones and web applications.

That object is solved by the features of the independent claims.

Further preferred embodiments of the present invention are laid down in the dependent claims.

### Brief summary of the present invention

The present invention discloses a new communication infrastructure between a device and a Web Application that is extended by a proxy. The proxy acts as so called representative. That means that the basic functionality of the Proxy is to combine the functionality of each mode of communication of the same device, and to present it as single device to the Web application. This is achieved by inventive session management of the Proxy. The Proxy generates for each mode of communication of a single device an own session. Communicating with the Web application, the Proxy uses only one common session for each single device independently which mode of communication is currently active.

The sessions IDs are stored at the proxy. All session IDs belonging to the same device are assigned to each other. Each communication between Proxy and device is established by using the appropriate session ID.

In a preferred embodiment, the Web application is a Portal application which additionally includes a Portal Filter. Since each request coming from the Proxy contains a markup language identifier indicating the markup language supported by the currently active mode of communication, the Portal Filter reads that markup language identifier and informs the Portal Aggregation component to provide the information in a markup language determined by the markup language identifier.

In a further embodiment of the present invention, the information indicating the currently active mode of communication is included in the Accept-Field of the request.

In further embodiment of the present invention, the Portal application additionally includes a Portlet Filter.
The Portlet Filter provides the functionality to read the request from the Proxy and to inform the Portlet to provide the information in a markup language determined by the markup language identifier.

In further embodiment of the present invention, the Proxy functionality is part of an external authentication proxy server. The Authentication Proxy Server provides an authentication mechanism for accessing the Web Application. The authentication mechanism is extended by the inventive Proxy functionality with its inventive session management. That means the authentication proxy transfers the authentication from one mode of communication to another mode of communication. The authentication proxy is the central instance to combine both mode of communication of the single device, and to manage the sessions with the respective networks (e.g. Voice Server; or data processing network (e.g. WML Gateway). Furthermore, the authentication proxy ensures that only one session with the Portal Application is created. For the Portal Application there exists only one Proxy.

In this embodiment the authentication proxy provides the functionality to keep only a single session with the Web Application - which is preferably a Portal Application - as long as one of the mode of communication of a single device is active, to transfer the authentication from one mode of communication to another mode of communication, and to update the user request according to the currently active mode of communication in order to switch from one mode of communication to another mode of communication.

The aggregation component which is preferably part of the Portal Application, has been adapted to trigger the switch from one mode of communication to another mode of communication.

In a preferred embodiment a keyword in the voice representation of the Portal Application is provided, or in the visual representation of the Portal Application a button in the WAP Version is presented. In this preferred embodiment the aggregation component provides the functionality to build up the markup language document around the markup fragments delivered by the Portlets by selecting the right markup version determined in the request by the markup language identifier, which can be WML or VXML, and changes the user interface in response to the keyword or a button pressed event depending on the mode of communication.

The Proxy may be located on a separate proxy server having a connection link to the device and a connection to the Web application, which is preferably a Portal application.

In another implementation the Proxy may be located at the same server that runs the Web Application.

Finally, the proxy could be implemented as a part of the Web application itself.

### Brief Description of the several views of the drawings

The above, as well as additional objectives, features and advantages of the present invention will be apparent in the following detailed written description.

The novel features of the invention are set forth in the appended claims. The invention itself, however, as well as a preferred mode of use, further objectives, and advantages thereof, will be best understood by reference to the following detailed description of an illustrative embodiment when read in conjunction with the accompanying drawings, wherein:
Fig. 1 shows a prior art communication infrastructure between a device and a Web application,
Fig. 2 shows the prior art communication infrastructure extended by the inventive proxy component,
Fig. 3 shows a preferred embodiment of the present invention in a communication infrastructure with a Portal application,
Fig. 4 shows the inventive message flow in a Portal environment according to Fig.3.

With respect to Fig. 2, there is depicted a prior art communication infrastructure which consist of a device and Web Application that is extended by the inventive proxy component.

The new and inventive component compared with the prior art is the proxy 9. The proxy 9 acts in that communication infrastructure as so called representative. That means that the basic functionality of the Proxy 9 is to combine the functionality of each mode of communication 3,4 of the same device 1, and to present it as single device 1 to the Web application 12. This is achieved by the inventive session management of the Proxy 9. The Proxy 9 generates for each mode of communication 3, 4 of a single device 1 (e.g. one session with the WAP Gate, one session with the Voice Server) an own session 5, 7. Communicating with the Web application 12, the Proxy 9 uses only one common session 10 for each device independently which mode of communication is currently active. That means that the Proxy 9 acts like a single device from the Web Application point of view.

The session identifiers (IDs) are stored at the proxy 9. All session IDs belonging to the same device 1 are assigned to each other. This may be implemented by a table containing the three session IDs and a common device identifier which may be preferably the phone number (ANI). Each communication between Proxy 9 and device 1 is established by using the respective session ID.

A request which is initiated by one mode of communication of the device is received via the respective network 3, 4 by the Proxy 9. If there is no session and no active switch request, the proxy 9 receives the request, activates the mode of communication 3, 4 by setting a reference to the active mode in for example a table, modifies the request by inserting the markup language identifier, and replaces the device description by its own description, and sends that modified request to the Web Application 12. The Web application 12 verifies the request, creates a session (common session), associates an initial state of the Web application 12 to the request, builds up a view of the Web application 12 state in a markup language identified by the markup language identifier, and includes the common session ID into the response to the Proxy 9 containing that view. The proxy 9 receives that response, stores the common session ID delivered with the response, determines the active mode, creates a single session with that currently active mode, and returns the response via respective network 3, 4 to the active mode of the device 1. The existing sessions between active mode of communication 3, 4 with the proxy 9, and proxy 9 and Web application 12 are assigned to each other by a common device identifier.

In a preferred embodiment of the present invention, the Web Application performs an authentication check during processing of a request, and if successful, includes an authentication token in the following response. The Proxy 9 stores that authentication token together with the session IDs. The Proxy 9 inserts that authentication token into all requests to the Web Application 12 coming from the same device 1.

In another preferred embodiment of the present invention, the Proxy performs an authentication check during processing of a request, and if successful, an authentication token is computed. The Proxy 9 stores that authentication token together with the session IDs. The Proxy 9 inserts that authentication token into all requests to the Web Application 12 coming from the same device 1. Common means, e.g. sharing of cryptographic keys are used to validate the authentication token on the Web application side.

The switch from one mode of communication to another mode of communication 3, 4 is initialized by the Proxy 9 by receiving a switch request from the device. The switch request may be generated by a button or a voice command. The Proxy 9 verifies the request and initiates a switch from one mode of communication to another one 3, 4. The common device identifier is available for both modes of communications 3, 4. Each request of each mode of communication 3, 4 may contain an own mode of communication identifier which will be mapped to common device identifier, or there is only one common device identifier for both mode of communications 3, 4. The Proxy 9 receives the switch request from the device 1 via the respective mode of communication network, and sends a notification (Push Proxy Gateway) to the device 1 to initiate another mode of communication 3, 4 with the proxy 9. The device 9 initiates the selected mode of communication 3, 4, and sends a new request to the proxy for continuing the already existing session. The proxy receives the request, activates the new mode of communication 3,4 by setting a reference to the active mode in a table for example, modifies the request by inserting a markup language identifier, includes the session ID created for the communication between Proxy 9 and Web application 12, replaces the device description by its own description, and sends that modified request to the Web Application 12. The Web Application 12 verifies the request, associates the already existing session data of the previous mode of communication 3, 4 to the current request which represents the Web application state, and builds up a new view of the same Web application state in a markup language identified by the markup language identifier, and generates a response to the Proxy 9 containing that new view. The proxy 9 receives that response, determines the active mode 3, 4, and returns the response via that network to the device. Concurrently, the Proxy 9 establishes a new session with the new selected mode of communication of the device. All existing previous sessions with the same device in another mode are automatically deleted when a switch of mode of communication is initiated.

In a preferred embodiment of the present invention, after a switch request has been initialized, the Proxy 9 includes a one time password in its notification to the mode of communication. This one time password has to be returned with the initiated request to the proxy 9. That mechanism secures that no unauthorized devices can take over the session with the proxy 9.

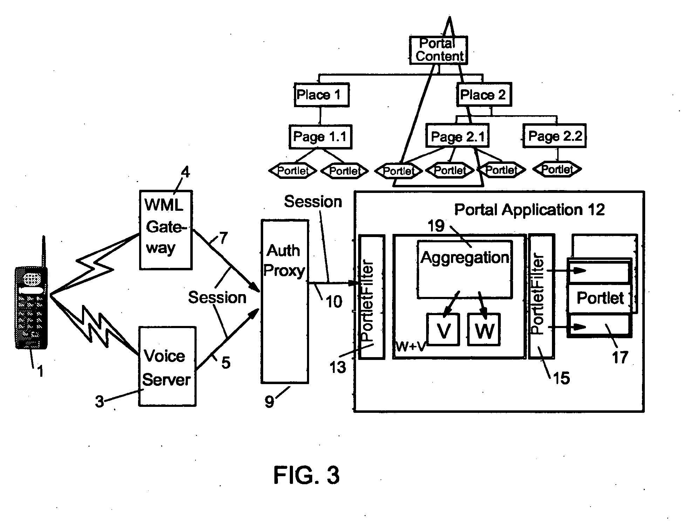

With respect to Fig.3, there is depicted a preferred embodiment of the present invention in a Portal application environment.

The device 1 is communicating with the Portal Application 20 via the inventive Authentication Proxy 9. The device 1 provides a WAP and a Voice functionality. Each functionality of the device 1 provides its own mode of communication. The Authentication Proxy 9 takes over the authentication of the device 1 with the Portal Application 20. The WAP and Voice functionality of the device 1 is combined and presented as one device to the Portal Application 12.

This is achieved by the inventive session management of the Authentication Proxy 9. The session handling of the two modes of communications has to be synchronized. The voice request generated by the voice mode of communication is typically identified by the phone number, the request comes from. This number is called ANI (Automatic Number Identification). The HTTP-Header of the WAP-request includes a User Agent String which provides information about the device. That User Agent String includes the phone number of the device 1. This number is the same than the ANI- hence mapping of both modes of communication by the authentication proxy is possible.

Three sessions are handled by the Authentication Proxy. One session with the WAP Gateway 4, another session with the Voice Server 3, and a third session 10 with the Portal Application 20 which has to be forwarded to the active mode of communication of the device 1. These session IDs have to be stored at the Authentication Proxy, to assign them to each other. This is implemented by using a table containing the three session IDS, and the ANI to ensure that only one WML and VXML sessions are saved that come from the same device 1.

To avoid markup changes (e.g. from VXML to WML) within one session, a container markup is created. This container markup is no real markup; it is only implemented to offer a markup which supports both needed markups. This markup has no own definition but it has two subtypes or versions. One version is VXML, and the other is WML. With this container markup only the version of the markup has to be changed in a case of change of mode of communication. The aggregation component 19 of the Portal Application 12 reads that version which is included in the request and loads the Portal information in the requested version.

The Authentication Proxy 9 in that preferred embodiment is the central instance to combine both mode of communications into one and to manage the session with the WML Gateway 4 and the Voice Server 3. The Authentication Proxy 9 ensures that only one session with the Portal Application 12 is created.

The aggregation component 19 of the Portal application 12 has to offer the functionality to trigger the change from one mode to another mode of communication. That can be implemented by providing a keyword in the voice presentation or a button in the WAP version. The aggregation has to build up markup around the Portlets 17 by selecting the right markup version contained in the appropriate request. The main functionality of the aggregation component 19 may be summarized as follows that it builds up the markup around the Portlet 17 markup fragment, and selects the markup by the markup version which are WML and VXML.

The Portal application 12 further includes a Portal Filter 13. The Portal Filter 13 reads the markup version contained in a change request and informs the Portal Aggregation 19 component to provide that markup version required by the currently active mode of communication.

The Portlet Filter 15 is responsible to wrap the VXML and WML capabilities of a Portlet 17 into a W + V capability presented to the aggregation component. The main functionality of the Portlet Filter 17 includes adding the capabilities to support W+V to an "old" Portlet 17, which is supporting WML and VXML but not the combined language W+V, and selecting the right content (either WML or Voice) from an old Portlet 17. The Portlet Filter 15 is not needed for Portlets supporting W+V natively.

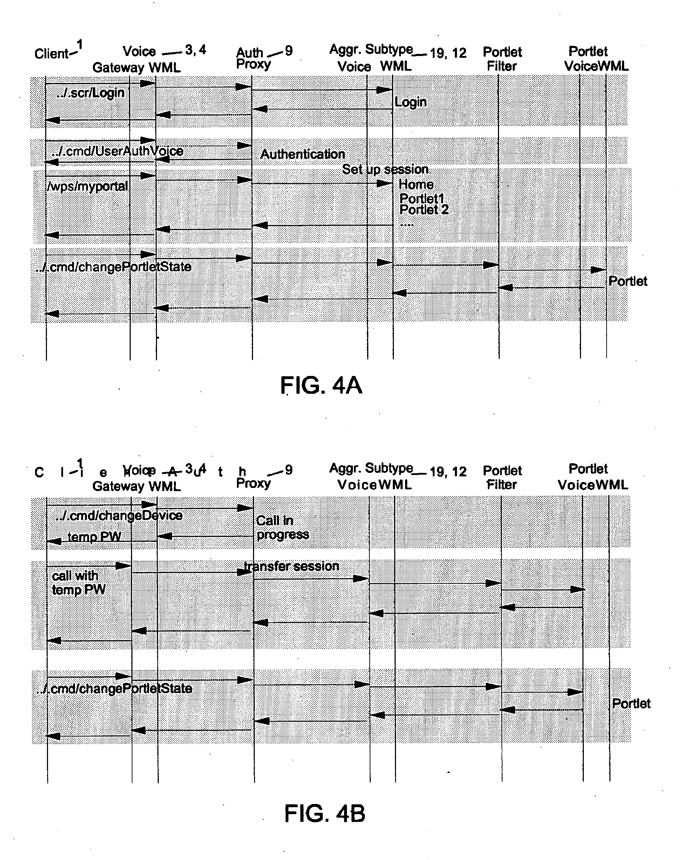

With respect to Fig.4, there is depicted the inventive message flow in a Portal environment according to Fig.3.

The WAP browser of the device 1 requests a logon procedure and is authenticated by the Authentication Proxy 9. The request is redirected to the Portal Application 20. A session is established and the WAP browser can now communicate with the Portal Application 12.

The device 1 sends a "switch" request which is intercepted by the Authentication Proxy 9. The Authentication Proxy 9 is responding by sending a phone number padded with a temp password. With this combined number the voice mode can dial to the voice server which forwards the request to the Authentication Proxy 9. The Authentication Proxy recognizes the ANI and checks the appended password. The session is transferred to the Voice Server 3. The Voice server 3 can continue the session of the WAP mode without further authentication by the Portal Application 12.

### Communication switch from Voice to WAP

The user makes a change device mode request (Voice - WAP) activated by Voice control (e.g. keyword command). This command is handled by the Authentication proxy 9. The Authentication Proxy 9 generates a temp password and reads the phone number (ANI) from the request.

The ANI, the password, and the session ID is stored in the table described with respect to Fig. 3. A URL is generated which consists of the Authentication Proxy address and the password.

The Authentication Proxy 9 waits for a voice confirmation before it pushes a WML document containing this link to the corresponding WAP mode. This connection is automatically switched and the user has to accept this link. By using this link the voice connection is terminated. The request to the pushed link from the WAP mode is received by the Authentication Proxy 9. The ANI is mapped to the stored session ID by using the session table. The password parameter of the link is used to verify the session is valid. The Authentication Proxy 9 can now switch the connection to the WAP mode device ID. The Authentication Proxy 9 requests the new markup from the Portal Application 12 and returns the Portal response to the WAP mode. The session transfer is complete.

### Communication switch from WAP to Voice

The user sends a change mode request (WAP - Voice) activated by the WAP control. This could be triggered by a button or link. The Authentication Proxy 9 processes the requests, reads the ANI from the user agent string, and generates a temp password. The ANI and the password are stored in a session table entry for this session. A call - in number (DNIS) is generated that consists of two parts: Voice Server Number + Password. A WML document with a WTAI link to this number is created. If the user accepts the link, the WML connection is terminated and the phone line activated. The password is attached to the DNIS. The Authentication Proxy 9 maps the ANI to the session ID. The password part of the DNIS is used to verify the session is valid. The Authentication Proxy 9 retrieves the Portal session ID from the table and switches the User Agent String to the Voice device ID. The Authentication Proxy requests the new markup from the Portal Application 20 and returns the response of the Portal Application 12 to the Voice Gateway 3. The Voice connection is now active.

## Claims

1. A Proxy (9) for using in a communication infrastructure between a device (1) and a Web Application (12), wherein said Proxy having a communication link to a Web Application and a communication link to said device, wherein said device (1) allows switching from one mode of communication to another mode of communication with said Web Application, wherein said proxy comprising:
means (9) for receiving requests from said currently active mode of communication of said device,
means (9) for assigning information indicating the currently active mode of communication to a common device ID representing said single multi - modal device,
means (9) for extending said request by a markup language identifier (ID) indicating the language supported by said currently active mode of communication,
means (9) for sending said extended request to said Web Application,
means (9) for receiving information being generated by said Web Application in a markup language indicated by said markup language identifier including a common session ID for using in the communication between said Proxy and said Web Application,
means (9) for generating a single session ID for said assigned currently active mode of communication of said device,
means (9) for transmitting said Web information including said single session ID assigned to said currently active mode of communication via said mode of communication network to said currently active mode of communication of said device, and
means (9) for switching from said currently active mode of communication to another mode of communication of said same device.

2. Proxy according to claim 1, further comprises means for authentication (9) of said device (1).

3. Proxy according to claim 1, wherein said means for switching provides the functionality to determine a switch request generated by said device (1), and to send a notification request to said device to initiate an another mode of communication.

4. Method for communication between a device and a Web Application by using a Proxy having a communication link to said Web Application and a communication link to said device, wherein said device (1) allows switching from one mode of communication to another mode of communication with said Web Application and said Proxy provides means for switching from said currently active mode of communication to another mode of communication of said same device, wherein said method comprising the steps of:
receiving requests from said currently active mode of communication by said proxy,
storing information indicating the currently active mode of communication by said proxy,
assigning said information to a common device ID representing said device by said proxy,
extending said request by a markup language identifier ID) indicating the language supported by said currently active mode of communication by said proxy,
sending said extended request to said Web Application by said proxy,
receiving information being generated by said Web Application in a language indicated by said markup language identifier including a common session ID for using it in the communication between said Proxy and said Web Application,
assigning said common session ID to said common device ID by said proxy,
generating a single session ID for said currently active mode of communication of said device for using it in the communication between said respective mode of communication and said proxy and assigning it to said common device ID, and
transmitting said Web information including said single session ID assigned to said currently active mode of communication via said mode of communication network to said currently active mode of communication of said device.

5. Method according to claim 4, wherein said common device identifier is derived from said incoming request.

6. Method according to claim 4, wherein said currently active mode of communication is derived from said incoming request.

7. Method according to claim 4, wherein the incoming request initiates an authentication process, the information about successful authentication is assigned to said common device ID, and used in requests generated by the same device.

8. Method according to claim 4, wherein the change of mode of communication is secured by a one time password.

9. Method according to claim 4, further comprises the steps:
determining a switch request for switching from one mode of communication to another mode of communication,
sending a notification to said multi - modal device for initiating switching to another mode of communication,
receiving a request from said new active mode of communication,
assigning said new active mode of communication to said existing common device id,
extending said new request by a new markup language identifier indicating the language supported by said currently active mode of communication,
sending said extended request to said Web Application including said common session ID assigned to the common device ID,
receiving information being generated by said Web Application in a language indicated by said mode of communication identifier,
generating a new single session ID for said currently active mode of communication of said device for using it in the communication between said respective mode of communication and said proxy and assigning it to said common device ID, and
transmitting said Web information including said single session ID assigned to said currently active mode of communication via said mode of communication network to said currently active mode of communication of said multi - modal device.

10. Method according to claim 4, wherein one mode of communication is voice communication using VoiceXML and another mode of communication is visual communication using XML.

11. Method according to claim 4, wherein said Web Application is a Portal Application.

12. Portal Application comprising
a communication link to a proxy wherein said Proxy having a communication link to a Portal Application and a communication link to a device, wherein said device (1) allows switching from one mode of communication to another mode of communication with said Portal Application,
component for receiving requests from said currently active mode of communication of said device from said proxy including a markup language identifier indicating the language supported by said currently active mode of communication,
a Portal Filter (13) component for informing said Portal Aggregation component to provide the Portal information in a form determined by said markup language identifier being included in said request,
a Portal Aggregation component (19) for providing the requested information in a form determined by said markup language identifier, and
component for generating a common session with said proxy and providing said information including said common session ID to said proxy, wherein said proxy maps said common session ID to said respective single session of said proxy with the respective currently active mode of communication.

13. Communication infrastructure for providing Web information to a device (1) having
a proxy server including:
a communication link to a Web Application and a communication link to said device, wherein said device (1) allows switching from one mode of communication to another mode of communication with said Web Application,
means (5,7) for creating a single session for each active mode of communication of said proxy with said respective mode of communication of said device,
means (10) for using a common session for each device independently which mode of communication is currently of said device is active,
means (9) for extending each request of said respective active mode of communication of said device by a markup language identifier indicating the markup language supported by said currently active mode of communication,
means (9) for providing information received from said Web Application to said respective active mode of communication by mapping said common session to said respective single active session belonging to the same device,
means (9) for switching from said currently active mode of communication to another mode of communication of said same device,
a Portal server including:
a communication link to said proxy server,
component for receiving requests from said respective active mode of communication of said device from said proxy server including a markup language identifier indicating the language supported by said currently active mode of communication,
a Portal Filter (13) component for informing said Portal Aggregation component (19) to provide the Portal information in a form determined by said markup language identifier being included in said request,
a Portal Aggregation (19) component for providing the requested information in a language determined by said markup language identifier, and a
component for generating a common session with said proxy and providing said information including said common session ID to said proxy, wherein said proxy maps said common session ID to said respective single session of said proxy with the respective currently active mode of communication.

14. Computer program product stored in the internal memory of a digital computer, containing parts of software code to execute method in accordance with claim 4-12 if the product is run on the computer.

## Patentansprüche

1. Proxy (Vermittlerrechner) (9) zur Verwendung in einer Datenübertragungs-Infrastruktur zwischen einem Gerät (1) und einer Netzanwendung (12), wobei der Proxy eine Datenübertragungsverbindung zu einer Netzanwendung und eine Datenübertragungsverbindung zu dem Gerät aufweist, wobei das Gerät (1) ein Umschalten von einer Datenübertragungsbetriebsart zu einer anderen Datenübertragungsbetriebsart mit der Netzanwendung ermöglicht, wobei der Proxy Folgendes umfasst:
ein Mittel (9) zum Empfangen von Anforderungen von der momentan aktiven Datenübertragungsbetriebsart des Geräts,
ein Mittel (9) zum Zuweisen von Informationen, die die momentan aktive Datenübertragungsbetriebsart angeben, an eine allgemeine Gerätekennung, die das einzelne multimodale Gerät darstellt,
ein Mittel (9) zum Erweitern der Anforderung durch eine Markup-Language-Kennung (ID), die die Sprache angibt, die durch die momentan aktive Datenübertragungsbetriebsart unterstützt wird,
ein Mittel (9) zum Senden der erweiterten Anforderung an die Netzanwendung,
ein Mittel (9) zum Empfangen von Informationen, die durch die Netzanwendung in einer Markup-Language erzeugt werden, die durch die Markup-Language-Kennung angegeben ist und eine allgemeine Sitzungskennung beinhaltet, zur Verwendung in der Datenübertragung zwischen dem Proxy und der Netzanwendung,
ein Mittel (9) zum Erzeugen einer einzelnen Sitzungskennung für die zugewiesene aktive Datenübertragungsbetriebsart des Geräts,
ein Mittel (9) zum Übertragen der Netzinformation, die die einzelne Sitzungskennung enthält, die der momentan aktiven Datenübertragungsbetriebsart zugeordnet ist, über das Netzwerk der Datenübertragungsbetriebsart an die momentan aktive Datenübertragungsbetriebsart des Geräts und
ein Mittel (9) zum Umschalten von der momentan aktiven Datenübertragungsbetriebsart zu einer anderen Datenübertragungsbetriebsart des gleichen Geräts.

2. Proxy nach Anspruch 1, der ferner ein Mittel für die Identitätsprüfung (9) des Geräts (1) umfasst.

3. Proxy nach Anspruch 1, wobei das Mittel zum Umschalten die Funktionalität zum Feststellen einer Umschaltanforderung, die durch das Gerät (1) erzeugt wird, und zum Senden einer Benachrichtigungsanforderung an das Gerät, um eine andere Datenübertragungsbetriebsart auszulösen, bereitstellt.

4. Verfahren zur Datenübertragung zwischen einem Gerät und einer Netzanwendung durch die Verwendung eines Proxy mit einer Datenübertragungsverbindung zu der Netzanwendung und einer Datenübertragungsverbindung zu dem Gerät, wobei das Gerät (1) das Umschalten von einer
Datenübertragungsbetriebsart zu einer anderen Datenübertragungsbetriebsart mit der Netzanwendung ermöglicht und der Proxy ein Mittel zum Umschalten von der momentan aktiven Datenübertragungsbetriebsart zu einer anderen Datenübertragungsbetriebsart des gleichen Geräts bereitstellt, wobei das Verfahren die folgenden Schritte umfasst:
Empfangen von Anforderungen von der momentan aktiven Datenübertragungsbetriebsart durch den Proxy,
Speichern von Informationen, die die momentan aktive Datenübertragungsbetriebsart angeben, durch den Proxy,
Zuweisen der Informationen zu einer allgemeinen Gerätekennung, die das Gerät repräsentiert, durch den Proxy,
Erweitern der Anforderung durch eine Markup-Language-Kennung (ID), die die Sprache angibt, die durch die momentan aktive Datenübertragungsbetriebsart unterstützt wird, durch den Proxy,
Senden der erweiterten Anforderung an die Netzanwendung durch den Proxy,
Empfangen von Informationen, die durch die Netzanwendung in einer Sprache erzeugt werden, die durch die Markup-Language-Kennung angegeben wird und die eine allgemeine Sitzungskennung enthält, für ihre Verwendung in der Datenübertragung zwischen dem Proxy und der Netzanwendung, Zuweisen der allgemeinen Sitzungskennung zu der allgemeinen Gerätekennung durch den Proxy,
Erzeugen einer einzelnen Sitzungskennung für die momentan aktive Datenübertragungsbetriebsart des Geräts für ihre Verwendung in der Datenübertragung zwischen der entsprechenden Datenübertragungsbetriebsart und dem Proxy und ihre Zuweisung zu der allgemeinen Gerätekennung, und
Übertragen der Netzinformationen, die die einzelne Sitzungskennung enthält, die der momentan aktiven Datenübertragungsbetriebsart zugewiesen ist, über das Netzwerk der Datenübertragungsbetriebsart an die momentan aktive Datenübertragungsbetriebsart des Geräts.

5. Verfahren nach Anspruch 4, wobei die allgemeine Gerätekennung von der ankommenden Anforderung abgeleitet wird.

6. Verfahren nach Anspruch 4, wobei die momentan aktive Datenübertragungsbetriebsart von der ankommenden Anforderung abgeleitet wird.

7. Verfahren nach Anspruch 4, wobei die ankommende Anforderung einen Identitätsprüfungsprozess auslöst, wobei die Informationen über eine erfolgreiche Identitätsprüfung der allgemeinen Gerätekennung zugewiesen und in Anforderungen, die durch dieses Gerät erzeugt werden, verwendet werden.

8. Verfahren nach Anspruch 4, wobei die Änderung der Datenübertragungsbetriebsart durch ein einmaliges Passwort gesichert wird.

9. Verfahren nach Anspruch 4, das ferner die folgenden Schritte umfasst:
Bestimmen einer Umschaltanforderung zum Umschalten von einer Datenübertragungsbetriebsart zu einer anderen,
Senden einer Benachrichtigung an das multimodale Gerät zum Auslösen der Umschaltung zu einer anderen Datenübertragungsbetriebsart,
Empfangen einer Anforderung von der neuen aktiven Datenübertragungsbetriebsart,
Zuweisen der neuen aktiven Datenübertragungsbetriebsart zu der vorhandenen allgemeinen Gerätekennung,
Erweitern der neuen Anforderung um eine neue Markup-Language-Kennung, die die Sprache angibt, die durch die momentan aktive Datenübertragungsbetriebsart unterstützt wird,
Senden der erweiterten Anforderung an die Netzanwendung, die die allgemeine Sitzungskennung enthält, die der allgemeinen Gerätskennung zugewiesen ist,
Empfangen von Informationen, die durch die Netzanwendung erzeugt werden, in einer Sprache, die durch die Kennung der Datenübertragungsbetriebsart angegeben wird, Erzeugen einer neuen einzelnen Sitzungskennung für die momentan aktive Datenübertragungsbetriebsart des Geräts für eine Verwendung in der Datenübertragung zwischen der jeweiligen Datenübertragungsbetriebsart und dem Proxy sowie ihre Zuweisung zu der allgemeinen Sitzungskennung, und
Übertragen der Netzinformationen, die die einzelne Sitzungskennung enthalten, die der momentan aktiven Datenübertragungsbetriebsart zugewiesen ist, über das Netzwerk der Datenübertragungsbetriebsart an die momentan aktive Datenübertragungsbetriebsart des multimodalen Geräts.

10. Verfahren nach Anspruch 4, wobei es sich bei einer Datenübertragungsbetriebsart um die Sprachdatenübertragung unter Verwendung von VoiceXML und bei der anderen Datenübertragungsbetriebsart um die visuelle Kommunikation unter Verwendung von XML handelt.

11. Verfahren nach Anspruch 4, wobei die Netzanwendung eine Portalanwendung ist.

12. Portalanwendung, die Folgendes umfasst:
eine Datenübertragungsverbindung zu einem Proxy, wobei der Proxy eine Datenübertragungsverbindung zu einer Portalanwendung und eine Datenübertragungsverbindung zu einem Gerät aufweist, wobei das Gerät (1) ein Umschalten von einer Datenübertragungsbetriebsart zu einer anderen Datenübertragungsbetriebsart mit der Portalanwendung ermöglicht,
eine Komponente zum Empfangen von Anforderungen von der momentan aktiven Datenübertragungsbetriebsart des Geräts von dem Proxy mit einer Markup-Language-Kennung, die die Sprache angibt, die durch die momentan aktive Datenübertragungsbetriebsart unterstützt wird,
eine Portalfilterkomponente (13) zum Informieren der Portal-Aggregationskomponente, um die Portalinformationen in einer Form darzustellen, die durch die in der Markup-Language-Kennung enthaltene Anforderung festgelegt wird,
eine Portal-Aggregationskomponente (19) zum Bereitstellen der geforderten Informationen in einer Form, die durch die Markup-Language-Kennung festgelegt ist, und
eine Komponente zum Erzeugen einer allgemeinen Sitzung mit dem Proxy und zum Bereitstellen der Informationen, die die allgemeine Sitzungskennung enthalten, an den Proxy, wobei der Proxy die allgemeine Sitzungskennung auf die entsprechende einzelne Sitzung des Proxy mit der entsprechenden momentan aktiven Datenübertragungsbetriebsart abbildet.

13. Datenübertragungs-Infrastruktur zum Liefern von Netzinformationen an ein Gerät (1) mit
einem Proxy-Server, der Folgendes enthält:
eine Datenübertragungsverbindung mit einer Netzanwendung und eine Datenübertragungsverbindung mit dem Gerät, wobei das Gerät (1) ein Umschalten von einer Datenübertragungsbetriebsart zu einer anderen Datenübertragungsbetriebsart mit der Netzanwendung ermöglicht,
Mittel (5, 7) zum Erzeugen einer einzelnen Sitzung für jede aktive Datenübertragungsbetriebsart des Proxy mit der entsprechenden Datenübertragungsbetriebsart des Geräts,
ein Mittel (10) zum Verwenden einer allgemeinen Sitzung für jedes Gerät, unabhängig davon, welche Datenübertragungsbetriebsart des Geräts momentan aktiv ist,
ein Mittel (9) zum Erweitern jeder Anforderung der entsprechenden aktiven Datenübertragungsbetriebsart des Geräts durch eine Markup-Language-Kennung, die die Markup-Language angibt, die durch die momentan aktive Datenübertragungsbetriebsart unterstützt wird,
ein Mittel (9) zum Liefern von Informationen, die von der Netzanwendung empfangen werden, an die entsprechende aktive Datenübertragungsbetriebsart durch Abbilden der allgemeinen Sitzung auf die entsprechende einzelne aktive Sitzung, die zum gleichen Gerät gehört,
ein Mittel (9) zum Umschalten von der momentan aktiven Datenübertragungsbetriebsart zu einer anderen Datenübertragungsbetriebsart des gleichen Geräts,
einem Portalserver, der Folgendes enthält:
eine Datenübertragungsverbindung zu dem Proxy-Server,
eine Komponente zum Empfangen von Anforderungen von der entsprechenden aktiven Datenübertragungsbetriebsart des Geräts von dem Proxy-Server mit einer Markup-Language-Kennung, die die Sprache angibt, die durch die momentan aktive Datenübertragungsbetriebsart unterstützt wird,
eine Portalfilter-Komponente (13) zum Informieren der Portal-Aggregationskomponente, um die Portal-Informationen in einer Form bereitzustellen, die durch die in der Anforderung enthalte Markup-Language-Kennung, festgelegt ist,
Portal-Aggregationskomponente (19) zum Bereitstellen der geforderten Informationen in einer Sprache, die durch die Markup-Language-Kennung festgelegt ist, und
eine Komponente zum Erzeugen einer allgemeinen Sitzung mit dem Proxy und Bereitstellen der Informationen, die die Kennung der allgemeinen Sitzung enthält, an den Proxy, wobei der Proxy die Kennung der allgemeinen Sitzung auf die entsprechende einzelne Sitzung des Proxy mit der entsprechenden momentan aktiven Datenübertragungsbetriebsart abbildet.

14. Computerprogrammprodukt, das in dem Speicher im Inneren eines digitalen Computers gespeichert ist und Teile des Softwarecodes enthält, um das Verfahren gemäß den Ansprüchen 4 bis 12 auszuführen, wenn das Produkt auf dem Computer läuft.

## Revendications

1. Mandataire (9) pour utilisation dans une infrastructure de communication, entre un dispositif (1) et une Application Web (12), dans lequel ledit Mandataire dispose d'une liaison de communication à une Application Web et d'une liaison de communication audit dispositif, dans lequel ledit dispositif (1) permet une commutation d'un mode de communication à un autre mode de communication avec ladite Application Web, dans lequel ledit mandataire comprend :
des moyens (9) pour recevoir des requêtes émanant dudit mode de communication actuellement actif dudit dispositif,
des moyens (9) pour affecter une information indiquant le mode de communication actuellement actif à un dispositif commun ID représentant ledit dispositif multimode unique,
des moyens (9) pour étendre ladite requête, par un identificateur de langage de balisage (ID) indiquant le langage supporté par ledit mode de communication actuellement actif,
des moyens (9) pour envoyer ladite requête étendue à ladite Application Web,
des moyens (9) pour recevoir de l'information générée par ladite Application Web dans un langage de balisage indiqué par ledit identificateur de langage de balisage incluant un ID de session commune, pour utilisation dans la communication entre ledit Mandataire et ladite Application Web,
des moyens (9) pour générer un ID de session unique pour ledit mode de communication actuellement actif affecté dudit dispositif,
des moyens (9) pour transmettre ladite information Web, incluant ledit ID de session unique affecté au mode de communication actuellement actif, via ledit réseau à modes de communication, audit au mode de communication actuellement actif dudit dispositif, et
moyens (9) pour commuter dudit mode de communication actuellement actif à un autre mode de communication dudit même dispositif.

2. Mandataire selon la revendication 1, comprenant en outre des moyens d'authentification (9) dudit dispositif.

3. Mandataire selon la revendication 1, dans lequel lesdits moyens de commutation fournissent la fonctionnalité pour déterminer une requête de commutation générée par ledit dispositif (1), et pour envoyer une requête de notification audit dispositif, pour initier un autre mode de communication.

4. Procédé de communication entre un dispositif et une Application Web, par utilisation d'un Mandataire ayant une liaison de communication à ladite Application Web et une liaison de communication audit dispositif, dans lequel ledit dispositif (1) permet une commutation d'un mode de communication à un autre mode de communication avec ladite Application Web, et ledit Mandataire fournit des moyens pour commuter dudit mode de communication actuellement actif à un autre mode de communication dudit même dispositif, dans lequel ledit procédé comprend les étapes consistant à ;
recevoir des requêtes à partir dudit mode de communication actuellement actif, par ledit mandataire ;
stocker de l'information indiquant le mode de communication actuellement actif, par ledit mandataire,
affecter ladite information à un ID de dispositif commun, représentant ledit dispositif, par ledit mandataire,
étendre ladite requête ladite requête, par un identificateur de langage de balisage (ID) indiquant le langage supporté par ledit mode de communication actuellement actif, par ledit mandataire,
envoyer ladite requête étendue à ladite Application Web, par ledit mandataire, recevoir de l'information générée par ladite Application Web dans un langage de balisage indiqué par ledit identificateur de langage de balisage incluant un ID de session commune, pour son utilisation dans la communication entre ledit Mandataire et ladite Application Web,
affecter ledit ID de session commune audit ID de dispositif commun, par ledit mandataire,
générer un ID de session unique pour ledit mode de communication actuellement actif dudit dispositif, pour son utilisation dans la communication entre ledit mode de communication respectif et ledit mandataire et l'affecter audit ID de dispositif commun, et
transmettre ladite information Web, incluant ledit ID de session unique affecté au mode de communication actuellement actif, via ledit réseau à modes de communication, audit au mode de communication actuellement actif dudit dispositif.

5. Procédé selon la revendication 4, dans lequel ledit identificateur de dispositif commun est dérivé de ladite requête entrante.

6. Procédé selon la revendication 4, dans lequel ledit mode de communication actuellement actif est dérivé de ladite requête entrante.

7. Procédé selon la revendication 4, dans lequel la requête entrante lance un processus d'ajustement, l'information au sujet d'une authentification réussie est affectée audit ID de dispositif commun, et utilisée dans des requêtes générées par le même dispositif.

8. Procédé selon la revendication 4, dans lequel le changement de mode de communication est assuré par un mot de passe unique.

9. Procédé selon la revendication 4, comprenant en outre les étapes consistant à :
déterminer une requête de commutation pour commuter d'un mode de communication à un autre mode de communication,
envoyer une notification audit dispositif multimode, pour initier une commutation à un autre mode de commutation,
recevoir une requête de la part dudit mode de communication nouvellement actif,
affecter ledit mode de communication nouvellement actif audit ID de dispositif commun existant,
étendre ladite nouvelle requête, par un nouvel identificateur de langage de balisage indiquant le langage supporté par ledit mode de communication actuellement actif,
envoyer ladite requête étendue à ladite Application Web, incluant ledit ID de session commune affecté au ID de dispositif commun,
recevoir de l'information générée par ladite Application Web, dans un langage indiqué par ledit identificateur de mode de communication,
générer un nouvel ID de session unique pour ledit mode de communication actuellement actif dudit dispositif, pour l'utiliser dans la communication entre ledit mode de communication respectif et ledit mandataire et l'affecter audit ID de dispositif commun, et
transmettre ladite information Web incluant ledit ID de session unique, affecté audit mode de communication actuellement actif via ledit réseau à modes de communication, audit au mode de communication actuellement actif dudit dispositif multimode.

10. Procédé selon la revendication 4, dans lequel un mode de communication est une communication vocale utilisant VoiceXML et un autre mode de communication est une communication visuelle utilisant XML.

11. Procédé selon la revendication 4, dans lequel ladite Application Web est une Application de Portail.

12. Application de Portail, comprenant :
une liaison de communication à un mandataire, dans laquelle ledit Mandataire présente une liaison de communication à une Application de portail et une liaison de communication à un dispositif, dans lequel ledit dispositif (1) permet une commutation d'un mode de communication à un autre mode de communication avec ladite Application Web,
un composant pour recevoir des requêtes émanant dudit mode de communication actuellement actif dudit dispositif, à partir dudit mandataire, incluant un identificateur de langage de balisage indiquant le langage supporté par ledit mode de communication actuellement actif,
un composant Filtre de Portail (13), pour informer ledit composant d'Agrégation de Portail de fournir l'information de Portail sous une forme déterminée par ledit identificateur de langage de balisage inclus dans ladite requête,
un composant d'Agrégation de Portail (19), pour fournir l'information requise sous une forme déterminée par ledit identificateur de langage de balisage, et
un composant pour générer une session commune avec ledit mandataire et fournir ladite information incluant ledit ID de session commune audit mandataire, dans laquelle ledit mandataire mappe ledit ID de session commune sur ladite session unique respective dudit mandataire avec ledit mode de communication actuellement actif.

13. Infrastructure de communication pour fournir une information Web à un dispositif (1), comprenant :
un serveur mandataire, comprenant :
une liaison de communication à une Application Web et une liaison de communication audit dispositif, dans lequel ledit dispositif (1) permet une commutation d'un mode de communication à un autre mode de communication avec ladite Application Web,
des moyens (5, 7) pour créer une session unique pour chaque mode de communication actif dudit mandataire avec ledit mode de communication respectif dudit dispositif,
des moyens (10) pour utiliser une session commune pour chaque dispositif, indépendamment du mode de communisation actuellement actif dudit dispositif,
des moyens (9) pour étendre chaque requête dudit mode de communisation respectif actif dudit dispositif, par un identificateur de langage de balisage indiquant le langage de balisage supporté par ledit mode de communication actuellement actif,
des moyens (9) pour fournir de l'information reçue de ladite Application Web audit mode de communication actuellement actif, en mappant ladite session commune sur ladite session active unique respective appartenant audit même dispositif,
des moyens (9) pour commuter dudit mode de communication actuellement actif à un autre mode de communication dudit même dispositif,
un serveur de Portail incluant :
une liaison de communication audit serveur mandataire,
un composant pour recevoir des requêtes émanant dudit mode de communication respectif actif dudit dispositif à partir dudit serveur mandataire,
incluant un identificateur de langage de balisage indiquant le langage supporté par ledit mode de communication actuellement actif,
un composant Filtre de Portail (13), pour informer ledit composant d'Agrégation de Portail (19) de fournir l'information de Portail sous une forme déterminée par ledit identificateur de langage de balisage inclus dans ladite requête,
un composant d'Agrégation de Portail (19), pour fournir l'information requise dans un langage déterminé par ledit identificateur de langage de balisage, et
un composant pour générer une session commune avec ledit mandataire et fournir ladite information incluant ledit ID de session commune audit mandataire, dans laquelle ledit mandataire mappe ledit ID de session commune sur ladite session unique respective dudit mandataire avec ledit mode de communication actuellement actif.

14. Produit programme informatique, stocké dans la mémoire interne d'un ordinateur numérique, contenant des parties de code logiciel pour exécuter un procédé selon les revendications 4 à 12 si le produit fonctionne sur l'ordinateur.
